# EUROPEAN PATENT APPLICATION

(11) **EP 2 928 184 A1**
(43) Date of publication of application: **07.10.2015**
(21) Application number: 13857735.8
(22) Date of filing: 29.11.2013
(51) Int. Cl.: H04N 19/00, H04N 19/50

(54) **METHOD AND DEVICE FOR ENCODING/ DECODING IMAGE SUPPORTING PLURALITY OF LAYERS**

(30) Priority: 29.11.2012 US 201261731471 P
(71) Applicant: LG Electronics Inc., Yeongdeungpo-gu Seoul 150-721 (KR)
(72) Inventor: KIM, Jungsun, Seoul 137-130 (KR); PARK, Joonyoung, Seoul 137-130 (KR); KIM, Chulkeun, Seoul 137-130 (KR); HENDRY, Hendry, Seoul 137-130 (KR); JEON, Byeongmoon, Seoul 137-130 (KR)
(74) Representative: Diehl & Partner GbR
(86) International application number: PCT/KR2013/010992
(87) International publication number: WO 2014/084656

(57) **Abstract**

A method and device for encoding/decoding an image supporting a plurality of layers are disclosed. The method for decoding the image includes the step of receiving a bitstream including information on a decoding target block of the current layer, the step of entropy decoding the bitstream and obtaining a 1D array of transformation coefficients of the decoding target block; the step of scanning the 1D array of the transformation coefficients according to a scan order and re-arranging it as a 2D array of the transformation coefficients, the step of inversely quantizing the 2D array of the transformation coefficients and obtaining a 2D array of transformation coefficients inversely quantized for the decoding target block, and the step of predicting the decoding target block based on a prediction mode for the decoding target block.

## Description

### TECHNICAL FIELD

The present invention relates to a video compression technique, and more particularly, to method and apparatus of performing scalable video coding.

### BACKGROUND ART

In recent years, demands for high-resolution and high-quality videos have increased more and more in various fields of applications. As pictures have higher resolution and higher quality, the amount of information on the pictures also increases. With the development of the apparatuses having a variety of performance and the networks having various environments, the same contents may be used with different levels of quality.

Specifically, as terminals are able to support diverse qualities of pictures and various network environments are established, a picture with general quality is enabled in one environment while a higher-quality picture may be available in another environment.

For example, a user having purchased video contents through a mobile terminal can enjoy the video contents on a large-screen display with a higher resolution at his or her home.

In recent years, as high definition (HD) broadcast services are available, a large number of users are getting used to high-resolution and high-quality videos and service providers and service users also pay attention to ultrahigh-definition (UHD) services having a resolution four times higher than HDTV.

Thus, there is a need to provide scalability to video quality, for example, the image quality, resolution, size and frame rate of a video, based on high-efficiency encoding and decoding methods on a high-capacity video so as to offer varied qualities of video services in different environments for users' demands.

### SUMMARY OF THE INVENTION

The present invention provides a method and an apparatus that increase compression efficiency in scalable video encoding/decoding.

The present invention also provides a method and an apparatus that scan transformation coefficients in video encoding/decoding.

In one aspect, a method of decoding an image supporting a plurality of layers is provided. The method of decoding an image includes: receiving a bitstream including information on a decoding target block of the current layer; entropy-decoding the bitstream and obtaining a 1D array of transformation coefficients of the decoding target block; scanning the 1D array of the transformation coefficients according to a scan order and rearranging the 1D array of the transformation coefficients as a 2D array of the transformation coefficients; inversely quantizing the 2D array of the transformation coefficients and obtaining a 2D array of transformation coefficients inversely quantized for the decoding target block; and predicting the decoding target block based on a prediction mode for the decoding target block.

In the rearranging of the 1D array as the 2D array of the transformation coefficients, the scan order may be derived based on the prediction mode applied to the decoding target block.

In another aspect, a method of encoding an image supporting a plurality of layers is provided. The method of encoding an image includes: performing a prediction based on a prediction mode for an encoding target block of a current layer to obtain a prediction sample; performing transformation of a residual sample obtained based on the prediction sample to generate a 2D array of transformation coefficients of the encoding target block; scanning the 2D array of the transformation coefficients according to a scan order and rearranging the 2D array of the transformation coefficients as a 1D array of the transformation coefficients; and entropy-encoding the 1D array of the transformation coefficients.

In the generating of the 2D array of the transformation coefficients of the encoding target block, the scan order may be determined based on the prediction mode applied to the encoding target block.

According to the present invention, transformation coefficients are scanned and rearranged in scalable video encoding/decoding to increase efficiency of transformation and/or entropy coding.

According to the present invention, a scan order can determined in accordance with a prediction method of an image in the scalable encoding/decoding, and as a result, encoding/decoding can be efficiently performed.

### BRIEF DESCRIPTION OF THE DRAWINGS

FIG. 1 is a block diagram schematically illustrating a video encoding apparatus supporting scalability according to an embodiment of the present invention.
FIG. 2 is a block diagram schematically illustrating a video decoding apparatus supporting scalability according to the embodiment of the present invention.
FIG. 3 is a conceptual diagram schematically illustrating one example of a scalable video coding structure using a plurality of layers to which the present invention can be applied.
FIG. 4 is a diagram illustrating one example of an intra prediction mode.
FIG. 5 is a diagram for schematically describing a scan method according to a scan order.
FIG. 6 is a diagram for describing inter-layer prediction to which the present invention can be applied.
FIG. 7 is a flowchart schematically illustrating an image encoding method supporting a plurality of layers according to the present invention.
FIG. 8 is a flowchart schematically illustrating an image decoding method supporting a plurality of layers according to the present invention.

### DESCRIPTION OF EXEMPLARY EMBODIMENTS

The present invention can be variously modified in various forms, and specific embodiments thereof will be described and shown in the drawings. However, the embodiments are not intended for limiting the invention. The terms used in the following description are used to merely describe specific embodiments, but are not intended to limit the invention. An expression of a singular number includes an expression of the plural number, so long as it is clearly read differently. The terms such as "include" and "have" are intended to indicate that features, numbers, steps, operations, elements, components, or combinations thereof used in the following description exist and it should be thus understood that the possibility of existence or addition of one or more different features, numbers, steps, operations, elements, components, or combinations thereof is not excluded.

On the other hand, elements in the drawings described in the invention are independently drawn for the purpose of convenience for explanation of different specific functions in an image encoding/decoding apparatus and does not mean that the elements are embodied by independent hardware or independent software. For example, two or more elements of the elements may be combined to form a single element, or one element may be divided into plural elements. The embodiments in which the elements are combined and/or divided belong to the scope of the invention without departing from the concept of the invention.

Hereinafter, exemplary embodiments of the invention will be described in detail with reference to the accompanying drawings. Like constituents in the drawings will be referenced by like reference numerals and will not be repeatedly described.

In a video coding method that supports scalability (hereinafter, referred to as "scalable coding"), input signals can be processed by layers. Depending on the layers, the input signals (input videos) may be different from each other in at least one of a resolution, a frame rate, a bit depth, a color format, and an aspect ratio.

In this description, scalable coding includes scalable encoding and scalable decoding.

In this description, scalable coding includes scalable encoding and scalable decoding. In scalable encoding/decoding, it is possible to reduce duplicate transmission/processing of information and to enhance compression efficiency by performing inter-layer prediction using an inter-layer difference, that is, on the basis of scalability.

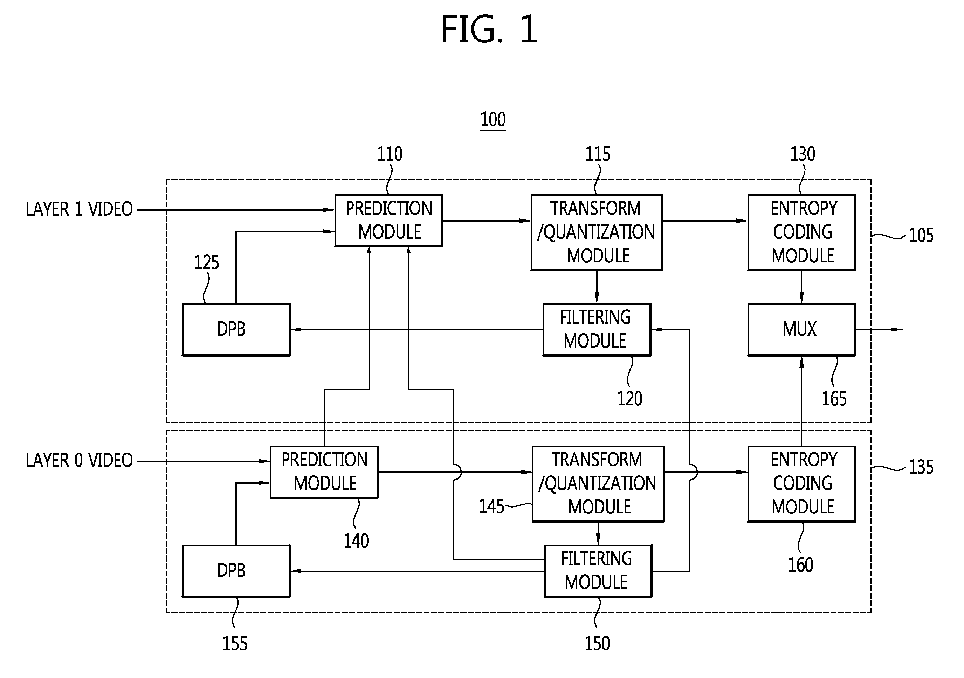

FIG. 1 is a block diagram schematically illustrating a video encoder that supports scalability according to an embodiment of the invention.

Referring to FIG. 1, the video encoder 100 includes an encoding module 105 for layer 1 and an encoding module 135 for layer 0.

Layer 0 may be a base layer, a reference layer or a lower layer, and layer 1 may be an enhancement layer, a current layer or an upper layer.

The encoding module 105 for layer 1 includes a prediction module 110, a transform/quantization module 115, a filtering module 120, a decoded picture buffer (DPB) 125, an entropy coding module 130, and a multiplexer (MUX) 165.

The encoding module 135 for layer 0 includes a prediction module 140, a transform/quantization module 145, a filtering module 150, a DPB 155, and an entropy coding module 160.

The prediction modules 110 and 140 may perform inter prediction and intra prediction on an input video. The prediction modules 110 and 140 may perform the predictions by predetermined processing units. The processing unit for prediction may be a coding unit (CU), a prediction unit (PU), or may be a transform unit (TU).

For example, the prediction modules 110 and 140 may determine whether to conduct inter prediction or intra prediction by CU, may determine a prediction mode by PU, and may perform prediction by PU or TU. Prediction to be performed includes construction of a predicted block and construction of a residual block (residual signal).

In the inter prediction, the prediction may be performed on the basis of information on at least one of a previous picture and/or a subsequent picture of a current picture to construct a predicted block. In the intra prediction, the prediction may be performed on the basis of information on a pixel in a current picture to construct a predicted block.

Examples of an inter prediction mode or method include a skip mode, a merge mode, a motion vector prediction (MVP) method. In the inter prediction, a reference picture for a current PU to be predicted may be selected and a reference block corresponding to the current PU may be selected from the reference picture. The prediction modules 110 and 140 may construct a predicted block on the basis of the reference block.

The predicted block may be constructed as an integer sample unit or as a fractional pixel unit. Here, a motion vector may also be represented in an integer pixel unit or a fractional pixel unit.

Motion information in the inter prediction, that is, information such as an index, a motion vector and a residual signal of a reference picture, is entropy-encoded and is transmitted to a video decoder. When a skip mode is applied, the residual signal may not be created, transformed, quantized, and transmitted at all.

Prediction modes in the intra prediction may include 33 directional prediction modes and at least two non-directional modes. The non-directional modes may include a DC prediction mode and a planar mode. In the intra prediction, a predicted block may be constructed after a filter is applied to a reference sample.

A PU may be a block with various sizes and shapes. For example, in inter prediction, a PU may be a 2Nx2N, 2NxN, Nx2N or NxN block (where N is an integer). In intra prediction, a PU may be a 2Nx2N or NxN block (where N is an integer). A PU with a size of NxN may be set to be applied only to a specific case. For example, the PU with the size of NxN may be set to be used only for a smallest CU or only for intra prediction. In addition to the PUs with the above-mentioned sizes, a PU may be further defined as an NxmN block, an mNxN block, a 2NxmN block, or an mNx2N block (where m<1) for use.

The prediction modules 110 may perform prediction for layer 1 using information on layer 0. In this specification, a process of predicting current layer information using another layer information is defined as an inter-layer prediction for convenience.

The current layer information predicted using the other layer information (that is, predicted by the inter-layer prediction) may include a texture, motion information, unit information, a predetermined parameter (for example, a filtering parameter), or the like.

The other layer information used for predicting the current layer information (that is, used for the inter-layer prediction) may include a texture, motion information, unit information, a predetermined parameter (for example, a filtering parameter), or the like.

As an example of the inter-layer prediction, an inter-layer motion prediction is also referred to as an inter-layer inter prediction. According to the inter-layer inter prediction, prediction for a current block of layer 1 (current layer or enhancement layer) may be carried out using motion information on layer 0 (reference layer or base layer).

When the inter-layer inter prediction is employed, motion information on a reference layer may be scaled.

As still another example of the inter-layer prediction, an inter-layer texture prediction is also referred to as an inter-layer intra prediction or intra base layer (BL) prediction. The inter-layer texture prediction may be applied, when a reference block in a reference layer is reconstructed by intra prediction

The inter-layer intra prediction may use a texture of a reference block in a reference layer as a predictive value for a current block in an enhancement layer. Here, the texture of the reference block may be scaled by upsampling.

As another example of the inter-layer prediction, an inter-layer unit parameter prediction may derive unit (CU, PU and/or TU) information on a base layer to be used as unit information on an enhancement layer or to determine unit information on an enhancement layer based on the unit information on the base layer.

Unit information may include information in each unit level. For instance, CU information may include information on partition (CU, PU and/or TU), information on transformation, information on prediction, and information on coding. PU information may include information on PU partition and information on prediction (for example, motion information and information on a prediction mode). TU information may include information on TU partition and information on transformation (transform coefficients and transform methods).

Unit information may include only partition information on a processing unit (for example, CU, PU, TU, etc.).

As yet another example of the inter-layer prediction, an inter-layer parameter prediction may derive a parameter used in a base layer to be reused in an enhancement layer or may predict a parameter for the enhancement layer based on the parameter used in the base layer.

Although the inter-layer texture prediction, the inter-layer motion prediction, the inter-layer unit information prediction and the inter-layer parameter prediction have been illustrated above as an inter-layer prediction, alternative inter-layer predictions may also be applicable to the present invention, without limiting thereto.

For example, the prediction modules 110 may conduct an inter-layer residual prediction of predicting a residual of a current layer using residual information on another layer and performing prediction for a current block in the current layer based on the residual.

Further, the prediction modules 110 may conduct an inter-layer differential prediction of performing prediction for a current block in a current layer using a differential picture between pictures obtained by upsampling or downsampling a reconstructed picture of the current layer and a reconstructed picture of another layer.

Further, the prediction module 110 may predict a texture of the current block or use a prediction of a generated inter-layer syntax by using syntax information of another layer as the inter-layer prediction. In this case, syntax information of the reference layer using the prediction of the current block may include information regarding the intra-prediction mode, motion information, and the like.

In this case, the inter-layer syntax may be predicted by referring to the intra-prediction mode from a block (intra) to which the intra-prediction mode is applied in the reference layer and referring to the motion information from a block (MV) to which the inter-prediction mode is applied.

For example, the reference layer is a P slice or a B slice, but the reference block in the slice may be a block to which the intra-prediction mode may be applied. In this case, when the inter-layer syntax prediction is applied, the inter-layer prediction that generates/predicts the texture for the current block by using the intra-prediction mode of the reference block in the syntax information of the reference layer may be performed.

Various prediction methods using the inter-layer may be used in plural in prediction for a specific block. For example, unit information or filtering parameter information of corresponding layer 0 or a corresponding block may be additionally used while using prediction information of layer 0 in order to predict the current block. A combination of the inter-layer prediction methods may be applied even to a prediction to be described below.

The transform/quantization modules 115 and 145 may transform the residual block by TU to create transform coefficients and may quantize the transform coefficients.

A transform block is a rectangular block of samples to which the same transformation is applied. The transform block may be a TU and may have a quad-tree structure.

The transform/quantization modules 115 and 145 may perform transformation based on a prediction mode applied to the residual block and a size of the transform block and a size of the transform block to create a two-dimensional (2D) array of transform coefficients. For example, when intra prediction is applied to the residual block and the residual block has a 4x4 array, the residual block may be transformed using discrete sine transform (DST). Otherwise, the residual block may be transformed using discrete cosine transform (DCT).

The transform/quantization modules 115 and 145 may quantize the transform coefficients to create the quantized transform coefficients.

The transform/quantization modules 115 and 145 may transmit the quantized transform coefficients to the entropy coding modules 130 and 160. Here, the transform/quantization modules 115 and 145 may rearrange the 2D array of the quantized transform coefficients into a one-dimensional (1D) array in a predetermined scan order and may transmit the rearranged 1D array to the entropy coding modules 130 and 160. The transform/quantization modules 115 and 145 may transmit a reconstructed block generated on the basis of the residual block and the predicted block to the filtering modules 120 and 150 for inter prediction, without being transformation/quantization.

If necessary, the transform/quantization modules 115 and 145 may skip transformation and perform only quantization or may skip both transformation and quantization. For example, the transform/quantization modules 115 and 145 may skip transformation for a block involving a specific prediction method or having a specific size, or a block involving a specific prediction block and having a specific size.

The entropy coding modules 130 and 180 may perform entropy encoding on the quantized transform coefficients. An encoding method, such as exponential Golomb coding and context-adaptive binary arithmetic coding (CABAC), may be used for entropy encoding.

The filtering modules 120 and 150 may apply a deblocking filter, an adaptive loop filter (ALF), or a sample adaptive offset (SAO) to a reconstructed picture.

The deblocking filter may remove a block distortion generated on boundaries between blocks in the reconstructed picture. The ALF may perform a filtering process on the basis of a resulting value of comparing the original picture with the reconstructed picture of which the blocks are filtered by the deblocking filter. The SAO may reconstruct an offset difference by pixel between the residual block having been subjected to the deblocking filter and the original picture and is applied in a form of a band offset, an edge offset, or the like.

The filtering modules 120 and 150 may not apply all of the deblocking filter, the ALF and the SAO, but may apply only the deblocking filter, may apply only the deblocking filter and the ALF, or may apply only the deblocking filter and the SAO.

The DPBs 125 and 155 may receive and store the reconstructed block or the reconstructed picture from the filtering modules 125 and 150. The DPB 125 and 155 may provide the reconstructed block or picture to the prediction modules 110 and 140 that perform inter prediction.

Information output from the entropy coding module 160 for layer 0 and information output from the entropy coding module 130 for layer 1 may be multiplexed by the MUX 165 and may be output as a bitstream.

Although the encoding module 105 for layer 1 has been described to include the MUX 165 for convenience, the MUX may be a device or module independent of the encoding module 105 for layer 1 and the encoding module 135 for layer 0.

Further, in the example of FIG. 1, it is illustrated that the video encoding apparatus 100 supporting the scalability includes an encoding unit 105 for layer 1 and an encoding unit 135 for layer 0 in order to perform encoding for each layer, but the present invention is not limited thereto. The video encoding apparatus supporting the scalability does not include the encoding unit for each layer and is constituted by modules included in the encoding unit 105 for layer 1 (alternatively, the encoding unit 135 for layer 0) to perform encoding for a plurality of layers for supporting the scalability.

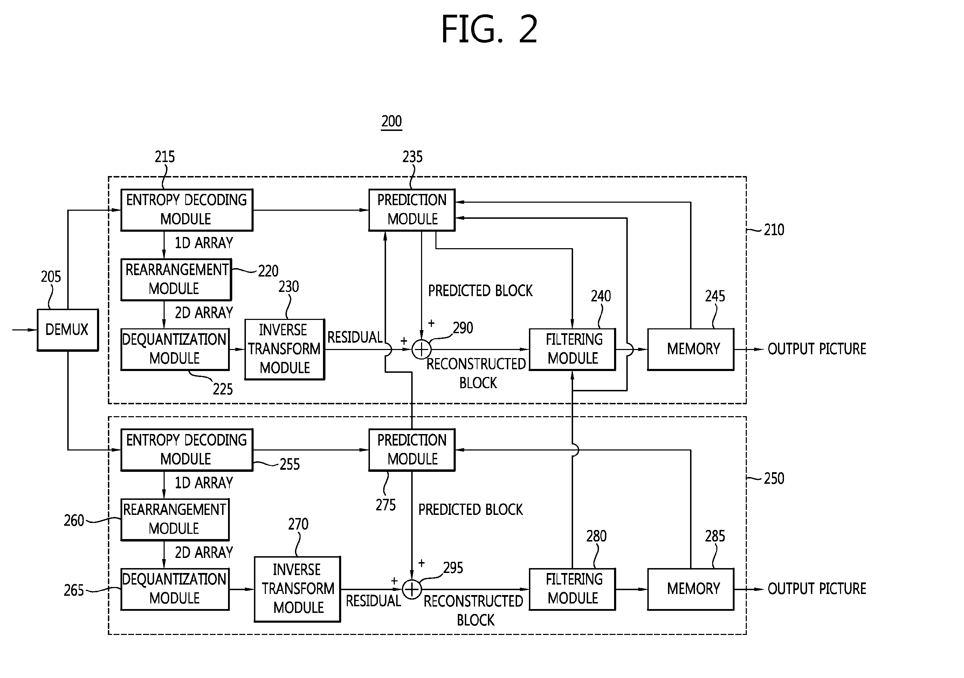

FIG. 2 is a block diagram schematically illustrating a video decoder that supports scalability according to an embodiment of the invention.

Referring to FIG. 2, the video decoder 200 includes a decoding module 210 for layer 1 and a decoding module 250 for layer 0.

Layer 0 may be a base layer, a reference layer or a lower layer, and layer 1 may be an enhancement layer, a current layer or an upper layer.

The decoding module 210 for layer 1 may include an entropy decoding module 215, a rearrangement module 220, a dequantization module 225, an inverse transform module 230, a prediction module 235, a filtering module 240, and a memory 245.

The decoding module 250 for layer 0 may include an entropy decoding module 255, a rearrangement module 260, a dequantization module 265, an inverse transform module 270, a prediction module 275, a filtering module 280, and a memory 285.

When a bitstream including video information is transmitted from the video encoder, a demultiplexer (DEMUX) 305 may demultiplex the information by layers and may transmit the information to decoders by layers.

The entropy decoding modules 215 and 255 may perform entropy decoding corresponding to an entropy coding method used in the video encoder. For example, when CABAC is used in the video encoder, the entropy decoding modules 215 and 255 may perform entropy decoding using CABAC.

Information for constructing a predicted block out of information decoded by the entropy decoding modules 215 and 255 may be provided to the prediction modules 235 and 275, and residual values entropy-decoded by the entropy decoding modules 215 and 255, that is, quantized transform coefficients, may be input to the rearrangement modules 220 and 260.

The rearrangement modules 220 and 260 may rearrange the information of the bitstream entropy-decoded by the entropy decoding modules 215 and 255, that is, the quantized transform coefficients, on the basis of a rearrangement method used in the video encoder.

For example, the rearrangement modules 220 and 260 may rearrange a 1D array of the quantized transform coefficients back into a 2D array of coefficients. The rearrangement modules 220 and 260 may perform scanning on the basis of a prediction mode applied to a current block (transform block) and/or a size of the transform block to construct a 2D array of coefficients (quantized transform coefficients).

The dequantization modules 225 and 265 may perform dequantization on the basis of a quantization parameter transmitted from the video encoder and the rearranged coefficients of the block to create transform coefficients.

The dequantization modules 225 and 265 may transmit the entropy-decoded residual values to the inverse transform modules 230 and 270, without dequantizing the residual values, depending on a predetermined condition or depending on a quantization method used for the video encoder.

The inverse transform modules 230 and 270 may perform inverse transformation of transformation performed by a transform module of the video encoder on the transform coefficients. The inverse transform modules 230 and 270 may perform inverse DCT and/or inverse DST of DCT and DST performed by the video encoder.

In the video encoder, DCT and/or DST may be selectively performed depending on a plurality of information pieces, such as a prediction method, a size of a current block and a prediction direction, and the inverse transform modules 230 and 270 of the video decoder may perform inverse transformation on the basis of transform information used by the video decoder.

For example, the inverse transform modules 230 and 270 may perform inverse DCT and inverse DST depending on a prediction mode/block size. Specifically, the inverse transform modules 230 and 270 may perform inverse DST on a 4x4 luma block to which intra prediction has been applied.

Alternatively, the inverse transform modules 230 and 270 may fixedly use a specific inverse transformation method regardless of a prediction mode/block size. For example, the inverse transform modules 230 and 270 may apply only inverse DST to all transform blocks. The inverse transform modules 230 and 270 may also apply only inverse DCT to all transform blocks.

The inverse transform modules 230 and 270 may inversely transform the transform coefficients or a block of the transform coefficients to construct a residual signal or a residual block.

The inverse transform modules 230 and 270 may skip transformation if necessary or depending on an encoding method used for the video encoder. For example, the inverse transform modules 230 and 270 may skip transformation for a block involving a specific prediction method or having a specific size, or a block involving a specific prediction block and having a specific size.

The prediction modules 235 and 275 may construct a predicted block of the current block on the basis of predicted block construction information provided from the entropy decoding modules 215 and 255 and information on a previously decoded block and/or picture provided from the memories 245 and 285.

When a prediction mode for the current block is an intra prediction mode, the prediction modules 235 and 275 may perform intra prediction on the current block on the basis of information on a pixel in a current picture.

When the prediction mode for the current block is an inter prediction mode, the prediction modules 235 and 275 may perform inter prediction on the current block on the basis of information included in at least one of a previous picture and a subsequent picture of the current picture. Part or all of motion information necessary for inter prediction may be derived based on information received from the video encoder.

When the skip mode is used as an inter prediction mode, the residual may not be transmitted from the video encoder and the predicted block may be used as a reconstructed block.

The prediction module 235 for layer 1 may perform inter prediction or intra prediction using only information in layer 1 and may perform inter-layer prediction using information on another layer (layer 0).

For instance, the prediction module 235 for layer 1 may perform prediction for the current block using one of motion information on layer 1, texture information on layer 1, unit information on layer 1 and parameter information on layer 1. The prediction module 235 for layer 1 may also perform prediction for the current block using a plurality of information pieces among the motion information on layer 1, the texture information on layer 1, the unit information on layer 1 and the parameter information on layer 1.

The prediction module 235 for layer 1 may receive the motion information on layer 1 from the prediction module 275 for layer 0 and may perform motion prediction. The inter-layer motion prediction is also referred to as an inter-layer inter prediction. By the inter-layer motion prediction, prediction for the current block in the current layer (enhancement layer) may be performed using the motion information on the reference layer (base layer). If necessary, the prediction module 235 may scale and use the motion information on the reference layer.

The prediction module 235 for layer 1 may receive the texture information on layer 1 from the prediction module 275 for layer 0 and may perform texture prediction. The texture prediction is also referred to as an inter-layer intra prediction or intra base layer (BL) prediction. In the inter-layer texture prediction, a texture of a reference block in the reference layer may be used as a predictive value for the current block in the enhancement layer. Here, the texture of the reference block may be scaled by upsampling.

The prediction module 235 for layer 1 may receive unit parameter information on layer 1 from the prediction module 275 for layer 0 and may perform unit parameter prediction. By the unit parameter prediction, unit (CU, PU, and/or TU) information on the base layer may be used as unit information on the enhancement layer or unit information on the enhancement layer may be determined on the basis of the unit information on the base layer.

The prediction module 235 for layer 1 may receive filtering parameter information on layer 1 from the prediction module 275 for layer 0 and may perform parameter prediction. By the parameter prediction, a parameter used for the base layer may be derived to be reused for the enhancement layer or a parameter for the enhancement layer may be predicted on the basis of the parameter used for the base layer.

Various prediction methods using the inter-layer may be used in plural in the prediction for the specific block. For example, the unit information or filtering parameter information of corresponding layer 0 or the corresponding block may be additionally used while using the prediction information of layer 0 in order to predict the current block. The combination of the inter-layer prediction methods may be applied even to the prediction to be described below.

Adders 290 and 295 may construct a reconstructed block using the predicted block constructed by the prediction modules 235 and 275 and the residual block constructed by the inverse transform modules 230 and 270. In this case, the adders 290 and 295 may be considered as separate modules (reconstructed block constructing module) that construct a reconstructed block.

The block and/or picture reconstructed by the adders 290 and 295 may be supplied to the filtering modules 240 and 280.

The filtering modules 240 and 280 may apply a deblocking filter, an SAO, and/or an ALF to the reconstructed block and/or picture.

The filtering modules 240 and 280 may not apply all of the deblocking filter, the ALF and the SAO, but may apply only the deblocking filter, may apply only the deblocking filter and the ALF, or may apply only the deblocking filter and the SAO.

Referring to FIG. 2, the filtering module 240 for layer 1 may perform a filtering operation on the reconstructed picture using the parameter information transmitted from the prediction module 235 for layer 1 and/or the filtering module 280 for layer 1. For example, the filtering module 240 for layer 1 may perform a filtering operation on layer 1 or an inter-layer filtering operation using a parameter predicted from a filtering parameter applied to layer 0.

The memories 245 and 285 may store the reconstructed block or picture for use as a reference picture or reference block. The memories 245 and 285 may output the reconstructed picture stored in the memories 245 and 285 via a predetermined output module (not shown) or a display (not shown).

Although FIG. 2 illustrates the rearrangement modules, the dequantization modules and the inverse transform modules as independent modules, the video decoder may also be configured to enable the dequantization/inverse transform modules as a single module to sequentially perform rearrangement, dequantization, and inverse transform like the video encoder of FIG. 1.

Further, in the example of FIG. 2, it is illustrated that the video decoding apparatus 200 supporting the scalability includes a decoding unit 210 for layer 1 and a decoding unit 250 for layer 0 in order to perform decoding for each layer, but the present invention is not limited thereto. The video decoding apparatus supporting the scalability does not include the decoding unit for each layer and is constituted by modules included in the decoding unit 210 for layer 1 (alternatively, the decoding unit 250 for layer 0) to perform decoding for the plurality of layers for supporting the scalability.

Although FIGS. 1 and 2 illustrate the prediction modules, the prediction module for layer 1 may include an inter-layer prediction module that performs a prediction process using information on another layer (layer 0) and an inter/intra prediction module that performs a prediction process without using information on another layer (layer 0).

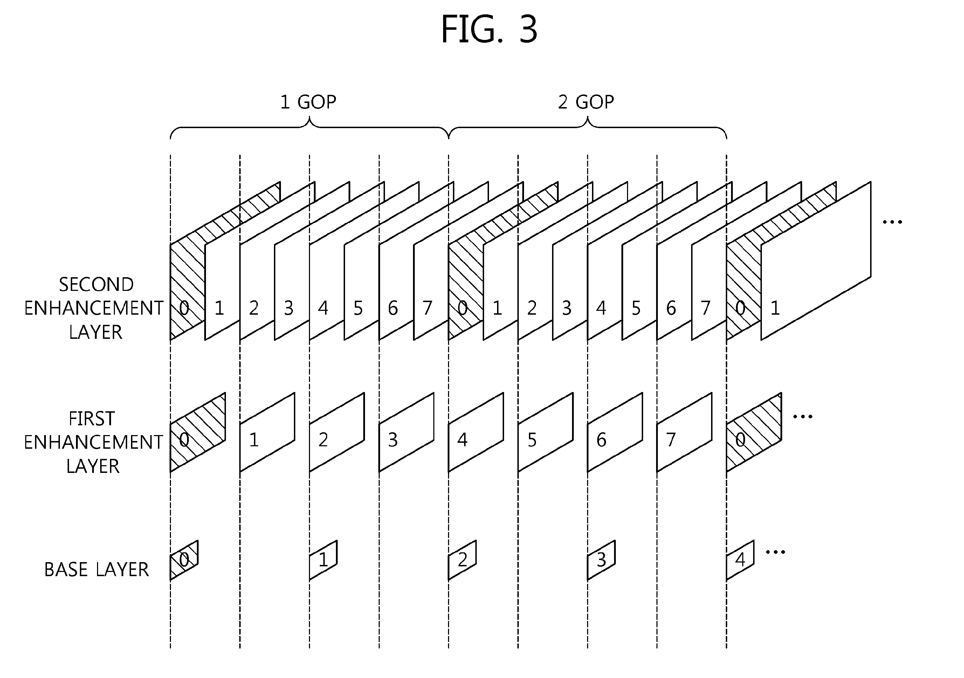

FIG. 3 is a conceptual diagram schematically illustrating one example of a scalable video coding structure using a plurality of layers to which the present invention can be applied. In FIG. 3, a group of picture (GOP) represents a picture group, that is, a group of pictures.

A transmission medium is required to transmit image data and performance thereof varies for each transmission medium according to various network environments. The scalable video coding method may be provided to be applied to various transmission media or network environments.

The video coding method (hereinafter, referred to as 'scalable coding' or 'scalable video coding') supporting the scalability is a coding method that increases encoding and decoding performances by removing inter-layer redundancy by using inter-layer texture information, motion information, a residual signal, and the like. The scalable video coding method may provide various scalabilities in spatial, temporal, and quality terms according to surrounding conditions such as transmission bit rate, transmission error rate, a system resource, and the like.

Scalable video coding may be performed by using a multiple-layer structure so as to provide a bitstream which is applicable to various network situations. For example, a scalable video coding structure may include a base layer that compresses and processes the image data by using the general image decoding method and may include an enhancement layer that compresses and processes the image data by using both decoding information of the basic layer and the general decoding method.

Herein, a layer means a set of images and bitstreams that are distinguished based on a space (for example, an image size), a time (for example, a decoding order, an image output order, and frame rate), image quality, complexity, and the like.

In the specification, the base layer may be referred to as the base layer or a lower layer. Further, the enhancement layer may be designated as the enhancement layer or a higher layer. The lower layer may represent a layer that supports lower scalability than a specific layer and the higher layer may represent a layer that supports higher scalability than a specific layer. A layer which the specific layer refers to in encoding or decoding may be referred to as a reference layer.

Referring to FIG. 3, for example, the base layer may be defined as standard definition (SD), a frame rate of 15 Hz, and a bit rate of 1 Mbps, and a first enhancement layer may be defined as high definition (HD), a frame rate of 30 Hz, and a bit rate of 3.9 Mbps, and a second enhancement layer may be defined as ultra high definition (4K-UHD), a frame rate of 60 Hz, and a bit rate of 27.2 Mbps.

The format, frame rate, bit rate, and the like as one embodiment may be decided differently as necessary. Further, the number of used layers is not limited to the embodiment and may be decided differently according to a situation. For example, if a transmission bandwidth is 4 Mbps, data may be transmitted at 15 Hz or less by decreasing the frame rate of the HD of the first enhancement layer.

The scalable video coding method may provide spatial, temporal, and quality scalabilities by the method described in the embodiment of FIG. 3.

In this specification, the scalable video encoding has the same as the scalable video decoding in terms of encoding and the scalable video decoding in terms of decoding.

Meanwhile, as described above, the encoding apparatus performs transformation by a transformation block unit having a quad tree structure. It may be decided which transformation is to be applied based on a prediction mode applied to a transformation target block and the size of a transformation block. For example, an applied transformation scheme may vary according to whether the prediction mode applied to the current block (transformation block) is the intra-prediction mode or the inter-prediction mode and what is the size of the current block (transformation block).

The encoding apparatus scans 2D quantized information (for example, a 2D quantized transformation coefficient array) to rearrange the scanned 2D quantized information as a 1D quantized transformation coefficient array. The encoding apparatus entropy-encodes the 1D quantized transformation coefficient array to transmit the entropy-encoded 1D quantized transformation coefficient array to the decoding apparatus.

The decoding apparatus entropy-decodes the information received from the encoding apparatus to generate the 1D quantized transformation coefficient array. The decoding apparatus scans the 1D quantized transformation coefficient array to rearrange the scanned 1D quantized transformation coefficient array as the 2D quantized transformation coefficient array. The decoding apparatus inversely quantizes the 2D quantized transformation coefficient array to generate a transformation coefficient block.

In other words, the rearrangement performed by the encoding apparatus scans 2D quantized transformation coefficients arranged to correspond to a sample (pixel) position of a scanning processing target block (for example, transformation block) according to a scan order to configure the scanned 2D quantized transformation coefficients as 1D array quantized transformation coefficients.

The rearrangement performed by the decoding apparatus scans 1D array quantized transformation coefficients according to the scan order to configure the scanned 1D array quantized transformation coefficients as 2D array quantized transformation coefficients corresponding to the sample (pixel) position of the scanning processing target block (for example, transformation block).

The scanning may be decided by at least one of the size, the scan order, and a scan start position of the transformation block.

For example, with respect to the transformation block which is a block of samples subjected to the same transformation,

(1) in the case where the prediction mode applied to the transformation block is the intra-prediction mode and the size of the transformation block is 4 x 4 or (2) in the case where the prediction mode applied to the transformation block is the intra-prediction mode, the size of the transformation block is 8 x 8, and the transformation block is a transformation block for luma samples,

when the intra-prediction mode is 6 to 14, the scan order may be a vertical scan order and when the intra-prediction mode is 22 to 30, the scan order may be a horizontal scan order. When the intra-prediction mode is 0 to 5, 15 to 21, or 31 to 34, the scan order may be an up-right diagonal scan order.

Further, not in the cases but in the case where the prediction mode applied to the transformation block is the inter-prediction mode, the scan order may be the up-right diagonal scan order. In addition, in the case where the prediction mode applied to the transformation block is the intra-prediction mode and the size of the transformation block is larger than 8 x 8 (for example, in the case where the size of the transformation block is 16 x 16 and 32 x 32), the scan order may be the up-right diagonal scan order.

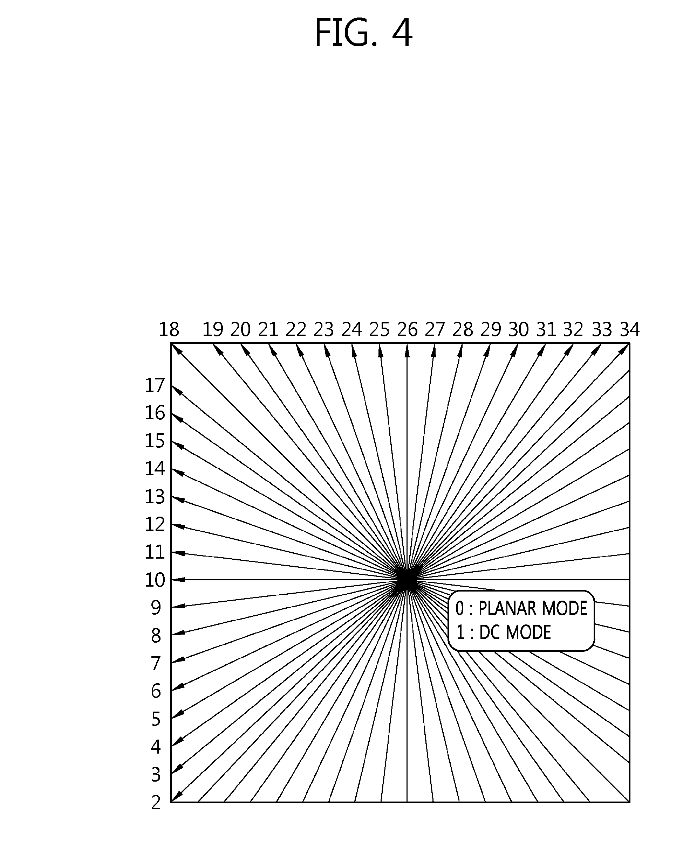

FIG. 4 is a diagram illustrating one example of an intra-prediction mode. Different mode numbers may be allocated to respective intra-prediction modes.

As illustrated in FIG. 4, the intra-prediction mode of 6 to 14 is a horizontal-direction prediction mode and the intra-prediction mode of 22 to 30 is a vertical-direction prediction mode. The intra-prediction mode other than the intra-prediction mode of 6 to 14 or 22 to 30 is a non-directional prediction mode, a prediction mode which is not a horizontal direction, or a prediction mode which is not a vertical direction.

Therefore, in the above example, (1) in the case where the prediction mode applied to the transformation block is the intra-prediction mode, (i) when the size of the transformation block is 4 x 4 or (ii) when the size of the transformation block is 8 x 8, and the transformation block is for the luma samples, if the intra-prediction mode is the horizontal-direction prediction mode, a vertical scan order is applied and if the intra-prediction mode is the vertical-direction prediction mode, a horizontal scan order is applied. (2) In other cases, that is, if the intra-prediction mode is the non-directional prediction mode, the prediction mode which is not the horizontal direction, or the prediction mode which is not the vertical direction, the up-right diagonal scan order is applied.

When the vertical scan order is applied, the quantized transformation coefficient in the transformation block is scanned in the vertical direction in the encoding apparatus.

In other words, in the case of the vertical scan order, the encoding apparatus may scan the quantized transformation coefficients downward along the same column from the quantized transformation coefficient positioned at an uppermost row of a scan target block (for example, transformation block). In this case, the scanning may be performed with respect to right columns sequentially from a leftmost column of the scan target block. Alternatively, the scanning may be performed with respect to left columns sequentially from a rightmost column of the scan target block.

The quantized transformation coefficients scanned in the 2D array scan target block (for example, transformation block) may be rearranged as the 1D quantized transformation coefficient array according to the scan order.

When the vertical scan order is applied, the quantized transformation coefficient is scanned to be rearranged in the vertical direction in the transformation block in the decoding apparatus.

In other words, the decoding apparatus scans 1D transformation coefficients in sequence to rearrange the scanned 1D transformation coefficients in a 2D array according to the vertical scan order. Therefore, the transformation block constituted by the quantized transformation coefficients may be generated.

According to the vertical scan order, the quantized transformation coefficient may be arranged downward along the same column from the uppermost row of the 2D array (transformation block). Right columns may be rearranged in sequence from a left most column of the 2D array or left columns may be rearranged in sequence from a rightmost column of the 2D array according to an order performed in the encoding apparatus.

When the horizontal scan order is applied, the transformation coefficient quantized in the transformation block is scanned in the horizontal direction in the encoding apparatus.

In other words, in the case of the horizontal scan order, the encoding apparatus may scan the quantized transformation coefficients rightward along the same row from the quantized transformation coefficient positioned at the leftmost column of the scan target block (for example, transformation block). In this case, the scanning may be performed with respect to lower rows sequentially from the uppermost row of the scan target block. Alternatively, the scanning may be performed with respect to upper rows sequentially from the lowermost row of the scan target block.

The quantized transformation coefficients scanned in the 2D array scan target block (for example, transformation block) may be rearranged as the 1D quantized transformation coefficient array according to the scan order.

When the horizontal scan order is applied, the quantized transformation coefficient is scanned to be rearranged in the horizontal direction in the transformation block in the decoding apparatus.

In other words, the decoding apparatus scans the 1D transformation coefficients in sequence to rearrange the scanned 1D transformation coefficients in the 2D array according to the horizontal scan order. Therefore, the transformation block constituted by the quantized transformation coefficients may be generated.

According to the horizontal scan order, the quantized transformation coefficient may be arranged rightward along the same row from the leftmost column of the 2D array (transformation block). Lower rows may be rearranged in sequence from an uppermost row of the 2D array or upper rows may be rearranged in sequence from a lowermost row of the 2D array according to the order performed in the encoding apparatus.

When the up-right diagonal scan order is applied, the quantized transformation coefficient in the transformation block is scanned in an up-right diagonal direction in the encoding apparatus.

In other words, in the case of the up-right scan order, the encoding apparatus may scan a rightmost quantized transformation coefficient from a leftmost quantized transformation coefficient with respect to a diagonal array of the quantized transformation coefficients in the scan target block (for example, transformation block). The diagonal array scan may be performed to a down-right side in sequence from an up-left diagonal array in the scan target block or the diagonal array scan may be performed to an up-left side in sequence from a down-right diagonal array in the scan target block.

The quantized transformation coefficients scanned in the 2D array scan target block (for example, transformation block) may be rearranged as the 1D quantized transformation coefficient array according to the scan order.

When the up-right diagonal scan order is applied, the quantized transformation coefficient is scanned to be rearranged in the up-right diagonal direction in the transformation block in the decoding apparatus.

In other words, the decoding apparatus scans the 1D transformation coefficients in sequence to rearrange the scanned 1D transformation coefficients in the 2D array according to the up-right diagonal scan order. Therefore, the transformation block constituted by the quantized transformation coefficients may be generated.

According to the up-right diagonal scan order, the quantized transformation coefficient may be rearranged up-rightward along the same diagonal array from a down-left side in the diagonal array of the 2D array (transformation block). Down-right diagonal arrays may be rearranged in sequence from the up-left diagonal array of the 2D array or the up-left diagonal arrays may be rearranged in sequence from the down-right diagonal array of the 2D array according to the order performed in the encoding apparatus.

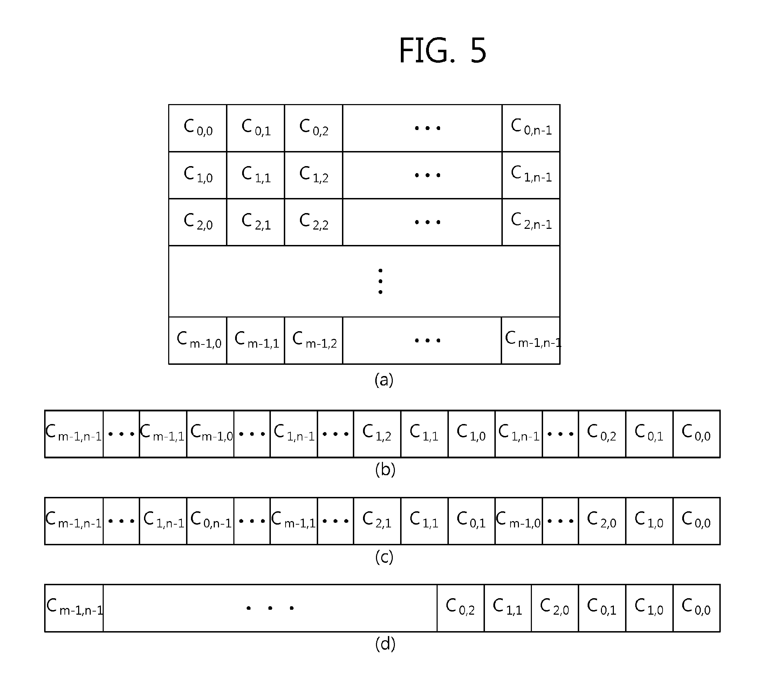

FIG. 5 is a diagram for schematically describing a scan method according to a scan order.

FIG. 5(a) schematically illustrates a 2D array of quantized transformation coefficients arranged in a transformation block having a size of n x m (n and m are integers).

Referring to FIG. 5(a), a quantized transformation coefficient C may be arranged to correspond to each sample (pixel) position. For example, a transformation coefficient C_{a,b} is arranged at a position of an a-th row and a b-th column in the transformation block.

FIG. 5(b) illustrates an example of a 1D array corresponding to the 2D quantized transformation coefficient array illustrated in FIG. 5(a) when a horizontal scan order is applied.

Referring to FIGS. 5(a) and 5(b), when the horizontal scan order is applied, the encoding apparatus may scan the quantized transformation coefficient in the order of C_{0,0} → C_{0,1} → ... →C_{0,n-1} at a first row in the transformation block having the size of n x m and scan the quantized transformation coefficient in the order of C_{1,0} → C_{1,1} → ... → C_{1,n-1} at a subsequent row. Scan is performed every row horizontally and when horizontal scan is terminated at one row, the horizontal scan may be performed at a subsequent row.

When the horizontal scan order is applied, the decoding apparatus may arrange quantized transformation coefficients sequentially read from a quantized transformation coefficient array having a length of n x m in the 2D array in the transformation block having the size of n x m according to the horizontal scan order.

For example, in FIG. 5(b), when the quantized transformation coefficient array is scanned forward (that is, in the direction of Cₘ-1,n-1 → C_{0,0}) from the end thereof, the decoding apparatus may arrange the quantized transformation coefficients in sequence at positions of C_{m-1,n-1} → C_{m-1,n-2} → ... → C_{m-1,1} → C_{m-1,0} like the 2D array of FIG. 5(a) according to the horizontal scan order and arrange n quantized transformation coefficients scanned next to C_{m-1,0} in sequence from the right by beginning a new row (by beginning an upper row). C_{0,n-1} → ... → C_{0,2} → C_{0,1} → C_{0,0} is scanned and rearranged by continuous scan and rearrangement of the quantized transformation coefficients, and as a result, the 2D array (for example, transformation block) of the quantized transformation coefficients, which has the size of n x m may be generated.

For example, in FIG. 5(b), when the quantized transformation coefficient array is scanned backward (that is, in the direction of C_{0,0} → C_{m-1,n-}1) from the start thereof, the decoding apparatus may arrange the quantized transformation coefficients in sequence at positions of C_{0,0} → C_{0,1} →... → C_{0,n-1} like the 2D array of FIG. 5(a) according to the horizontal scan order and arrange n quantized transformation coefficients scanned next to C_{0,n-1} in sequence from the left by beginning a new row (by beginning a lower row). C_{m-1,0} → C_{m-1,1} →C_{m-1,2} →...→ C_{m-1,n-1} is scanned and rearranged by the continuous scan and rearrangement of the quantized transformation coefficients, and as a result, the 2D array (for example, transformation block) of the quantized transformation coefficients, which has the size of n x m may be generated.

FIG. 5(c) illustrates an example of the 1D array corresponding to the 2D quantized transformation coefficient array illustrated in FIG. 5(a) when a vertical scan order is applied.

Referring to FIGS. 5(a) and 5(c), when the vertical scan order is applied, the encoding apparatus may scan the quantized transformation coefficient in the order of C_{0,0} → C_{1,0} → ...

→ C_{m-1,0} at a first column in the transformation block having the size of n x m and scan the quantized transformation coefficient in the order of C_{0,1} → C_{1,1} → ... → C_{m-1,1} at a subsequent column. Scan is performed every column vertically and when the vertical scan is terminated at one column, the vertical scan may be performed at a subsequent column.

When the vertical scan order is applied, the decoding apparatus may arrange quantized transformation coefficients sequentially read from the quantized transformation coefficient array having the length of n x m in the 2D array in the transformation block having the size of n x m according to the horizontal scan order.

For example, in FIG. 5(c), when the quantized transformation coefficient array is scanned forward (that is, in the direction of Cₘ₋1,n-1 → C_{0,0}) from the end thereof, the decoding apparatus may arrange the quantized transformation coefficients in sequence at positions of C_{m-1,n-1} → C_{m-2,n-1} →...→ C_{1,n-1} → C_{0,n-1} like the 2D array of FIG. 5(a) according to the vertical scan order and arrange m quantized transformation coefficients scanned next to C_{0,n-1} in sequence from the bottom by beginning a new column (by beginning a left column). C_{m-1,0} → ... C_{2,0} → C_{1,0} → C_{0,0} is scanned and rearranged by the continuous scan and rearrangement of the quantized transformation coefficients, and as a result, the 2D array (for example, transformation block) of the quantized transformation coefficients, which has the size of n x m may be generated.

For example, in FIG. 5(c), when the quantized transformation coefficient array is scanned backward (that is, in the direction of C_{0,0} → C_{m-1,n-}1) from the start thereof, the decoding apparatus may arrange the quantized transformation coefficients in sequence at positions of C_{0,0} → C_{1,0} → C_{2,0} →...→ C_{m-1,0} like the 2D array of FIG. 5(a) according to the vertical scan order and arrange m quantized transformation coefficients scanned next to C_{m-1,0} in sequence from the top by beginning a new column (by beginning a right column). C_{0,n-1}

→ C_{1,n-1} → C_{2,n-1} → ... → C_{m-1,n-1} is scanned and rearranged by the continuous scan and rearrangement of the quantized transformation coefficients, and as a result, the 2D array (for example, transformation block) of the quantized transformation coefficients, which has the size of n x m may be generated.

FIG. 5(d) illustrates an example of the 1D array corresponding to the 2D quantized transformation coefficient array illustrated in FIG. 5(a) when an up-right diagonal scan order is applied.

Referring to FIGS. 5(a) and 5(d), when the up-right diagonal scan order is applied, the encoding apparatus scans quantized transformation coefficient at a first diagonal column in an up-right direction according to a diagonal column order in the transformation block having the size of n x m and scans quantized transformation coefficients at subsequent diagonal columns in the up-right direction in sequence. For example, referring to FIG. 5(a), since only C_{0,0} is present as the quantized transformation coefficient at the first diagonal column in the transformation block, the quantized transformation coefficients may be scanned in the order of C_{1,0} → C_{0,1} at the subsequent diagonal column and subsequently, the quantized transformation coefficients may be scanned in the order of C_{2,0} → C_{1,1} → C_{0,2} at the subsequent diagonal column. The quantized transformation coefficients at the diagonal columns are scanned in sequence and thereafter, a last quantized transformation coefficient C_{m-1,n-1} is scanned.

The encoding apparatus scans the quantized transformation coefficients according to the up-right diagonal scan order to generate a 1D quantized transformation coefficient array illustrated in FIG. 5(d). When a first scanned coefficient is positioned at a former side according to the up-right diagonal scan order, the 1D quantized transformation coefficient array has the order of C_{m-1,n-1} ... C_{0,2} C_{1,1} C_{2,0} C_{0,1} C_{1,0} C_{0,0} as illustrated in FIG. 5(d).

When the up-right diagonal scan order is applied, the decoding apparatus may arrange quantized transformation coefficients sequentially read from the quantized transformation coefficient array having the length of n x m in the 2D array in the transformation block having the size of n x m according to the up-right diagonal scan order.

For example, when the 1D array of the quantized transformation coefficients illustrated in FIG. 5(d) is scanned backward (that is, in the direction of C_{0,0} → C_{m-1,n-1}) from the start of the quantized transformation coefficient array, the decoding apparatus may arrange the scanned quantized transformation coefficients along a diagonal column of the 2D array according to the up-right diagonal scan order. The scanned transformation coefficients may be first arranged at a diagonal column positioned at an up-leftmost side of the 2D array and sequentially arranged at diagonal columns in a down-right direction. The quantized transformation coefficients may be arranged from a down-left side to an up-right side at each diagonal column.

That is, referring to the 2D array, the quantized transformation coefficients may be arranged in the order of C_{0,0} → C_{1,0} → C_{0,1} → C_{2,0} → C_{1,1} → C_{0,2} → ... → C_{m-1,n-2} → C_{m-2,n-1}

→ C_{m-1,n-1}.

When the quantized transformation coefficient array is scanned forward (that is, in the direction of C_{m-1,n-1} → C_{0,0}) from the end of the quantized transformation coefficient array in FIG. 5(d), the decoding apparatus may arrange the scanned quantized transformation coefficients along the diagonal column of the 2D array according to the up-right diagonal scan order. The scanned transformation coefficients may be first arranged at a diagonal column positioned at a down-rightmost side of the 2D array and sequentially arranged at diagonal columns in an up-left direction. The quantized transformation coefficients may be arranged from the down-left side to the up-right side at each diagonal column.

That is, referring to the 2D array of FIG. 5(a), the quantized transformation coefficients may be arranged in the order of C_{m-1,n-1} → Cₘ₋₁,ₙ₋₂ → C_{m-2,n-1} →...→ C_{2,0} → C_{1,1} → C_{0,2} → C_{1,0} → C_{0,1} → C_{0,0}.

In the example of FIG. 5, m = n means a case in which transformation is performed by the unit of a normal-direction block (for example, transformation block) and n ≠ m means a case in which the transformation is performed by the unit of an abnormal-direction block (for example, transformation block).

The scan of the transformation coefficients may be performed by the unit of a sub block in the 2D quantized transformation coefficient array (for example, transformation block).

For example, the encoding apparatus scans and rearranges quantized transformation coefficients in one sub block in sequence with respect to sub blocks in a transformation coefficient array and thereafter, scan and rearranges quantized transformation coefficients in a subsequent sub block in sequence to generate the 1D quantized transformation coefficient array. The quantized transformation coefficients may be scanned according to the horizontal scan order, the vertical scan order, and the up-right diagonal scan order in the sub block.

The decoding apparatus may scan and rearrange the 1D transformation coefficient array by the unit of the sub block. For example, the decoding apparatus scans the quantized transformation coefficients in one sub block (for example, first sub block) and rearranges the quantized transformation coefficients at a position of the first sub block in a 2D array of all transformation coefficients to generate the 2D array and thereafter, scans the quantized transformation coefficients in a subsequent sub block (for example, second sub block) and rearranges the quantized transformation coefficients at a position of the second sub block in the 2D array of all transformation coefficients to generate the 2D array (for example, transformation block) of the transformation coefficients. In this case, the quantized transformation coefficients may be rearranged in the sub block according to the horizontal scan order, the vertical scan order, and the up-right diagonal scan order.

A scan order of sub blocks and the scan order of the quantized transformation coefficients in the sub block may be the same as or different from each other. For example, when the sub blocks is scanned or rearranged in the up-right diagonal scan order, the quantized transformation coefficients in the sub block may also be scanned or rearranged in the up-right diagonal scan order. Further, when the sub blocks is scanned or rearranged in the up-right diagonal scan order, the quantized transformation coefficients in the sub block may be scanned or rearranged in the horizontal scan order or the vertical scan order.

Meanwhile, when the prediction for the current layer is performed in the scalable video coding as described above, the inter-prediction or intra-prediction may be performed by using only information on the current layer and the inter-layer prediction may be performed by using information on another layer.

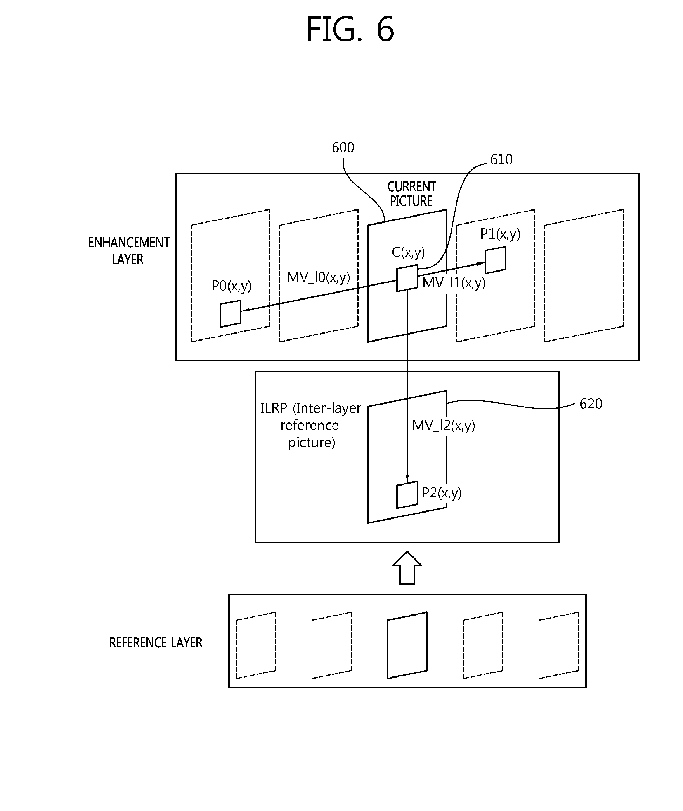

FIG. 6 is a diagram for describing inter-layer prediction to which the present invention can be applied.

Referring to FIG. 6, when a prediction for a current block 610 of the enhancement layer (current layer) is performed in a scalable video coding structure supporting a plurality of layers, the prediction (intra or inter-prediction) may be performed by using information on a layer which is the same as the current block 610, but the prediction (intra or inter-prediction) may be performed by using a picture which has already been restored on a lower layer than the current layer in order to increase prediction efficiency.

Whether to use the inter-layer prediction may be signaled from the encoding apparatus while decoding the current block 610. For example, whether to use the inter-layer prediction may be known through inter_layer_pred_enabled_flag information indicating whether to use the inter-layer prediction while decoding a current picture 600. When a value of inter_layer_pred_enabled_flag is 1, it is indicated that the inter-layer prediction may be used while decoding the current picture 600 and when the value of inter_layer_pred_enabled_flag is 0, it is indicated that the inter-layer prediction is not used while decoding the current picture 600.

When inter-prediction is used while decoding the current block 610, information on a picture of another layer used for the inter-layer prediction is required. That is, information on the reference layer referred to in the inter-layer prediction, information on a reference picture referred to in the reference layer, and the like are required. The reference picture referred to in the inter-layer prediction may be referred to as an inter-layer reference picture. In this case, the inter-layer reference picture may be a reference picture resampled according to scalability of the current layer (enhancement layer).

The inter-layer reference picture may be derived from a reference picture list constituted by the reference pictures used for the inter-prediction or inter-layer prediction.

The reference picture list may include reference picture list 0 (hereinafter, referred to as L0) used for the inter-prediction or inter-layer prediction of the P slice or B slice and reference picture list 1 (hereinafter, referred to as L1) used for the inter-prediction or inter-layer prediction of the B slice. In other words, L0 may be used in the inter-prediction or the inter-layer prediction for a block of the P slice or B slice performing a unidirectional prediction and L0 and L1 may be used in the inter-prediction or the inter-layer prediction for a block of the B slice performing a bidirectional prediction.

When the inter-layer prediction is performed while decoding the P slice or B slice, the reference picture list is configured. The reference picture list may include the reference picture used in the inter-prediction and the reference picture used in the inter-layer prediction and the inter-layer reference picture may be specified by a reference picture index.

The reference picture lists L0 and L1 may be configured based on a short-term reference picture set RefPicSetStCurrBefore constituted by short-term reference pictures having a picture order count (POC) smaller than the POC of a current picture, a short-term reference picture set RefPicSetStCurrAfter constituted by short-term reference pictures having a picture order count (POC) larger than the POC of the current picture, and a long-term reference picture set RefPicSetLtCurr, and inter-layer reference picture sets RefPicSetInterLayer0 and RefPicSetInterLayer1.

The POC represents a display order of the picture, the short-term reference picture may be a picture having a POC which is not significantly different from the POC of the current picture, and the long-term reference picture may be a picture having a POC which is significantly different from the POC of the current picture.

For example, L0 may be constituted by RefPicSetStCurrBefore, RefPicSetInterLayer0, RefPicSetStCurrAfter, RefPicSetLtCurr, and RefPicSetInterLayer1 in sequence. L1 may be constituted by RefPicSetStCurrAfter, RefPicSetInterLayer1, RefPicSetStCurrBefore, RefPicSetLtCurr, and RefPicSetInterLayer0 in sequence.

In this case, when the number of reference pictures of the reference picture list is limited, RefPicSetInterLayer1 in L0 or L1 may be empty.

As illustrated in FIG. 6, when the current picture 600 of the enhancement layer performs the inter-layer prediction, the reference picture list may be configured as described above. In this case, an inter-layer reference picture 620 may be derived from the reference picture list through the reference picture index indicating the inter-layer reference picture signaled from the encoding apparatus. The inter-layer reference picture 620 may be a reference picture resampled according to the scalability of the enhancement layer.

In this case, an inter-layer sample prediction that performs the prediction by using sample information from the inter-layer reference picture 620 and an inter-layer motion prediction that perform the prediction by using motion information from the inter-layer reference picture 620 are provided.

Whether to perform the inter-layer sample prediction or whether to perform the inter-layer motion prediction with respect to the current block 610 of the current picture 600 may be determined according to a dependency type between the enhancement layer and the reference layer. The dependency type may be signaled from the encoding apparatus.

For example, the dependency type may be specified according to a value of direct_dependency_type. When the value of direct_dependency_type is 0, the reference layer may be used for the inter-layer sample prediction of the enhancement layer, but may not be used for the inter-layer motion prediction. When the value of direct_dependency_type is 1, the reference layer may be used for the inter-layer motion prediction of the enhancement layer, but may not be used for the inter-layer sample prediction. When the value of direct_dependency_type is 2, the reference layer may be used for the inter-layer sample prediction and the inter-layer motion prediction of the enhancement layer.

As described above, when the enhancement layer is coded by using the inter-layer prediction in the scalable video coding, the prediction is performed by using information on another picture unlike a case in which the prediction is performed based on a prediction direction of a general intra-prediction. Therefore, when a method that determines the scan order of the transformation coefficients by using mode information of the existing intra-prediction, the applied method may influence the coding efficiency. In the present invention, a coefficient scanning method in the scalable video coding in which the inter-layer prediction mode is used is intended to be proposed. For example, when the intra-prediction mode applied to the current block is the inter-layer prediction mode, the scan order for the transformation coefficients of the current block may be fixed to one specific scan order. The scan order for the transformation coefficients of the current block may be fixed to the up-right diagonal scan order, the vertical scan order, or the horizontal scan order.

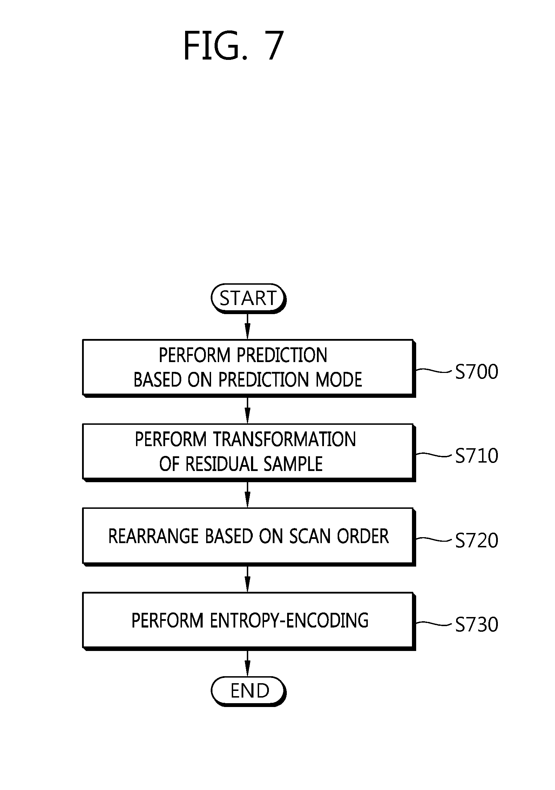

FIG. 7 is a flowchart schematically illustrating an image encoding method supporting a plurality of layers according to the present invention. The method of FIG. 7 may be performed by the encoding apparatus of FIG. 1.

Referring to FIG. 7, the encoding apparatus predicts an encoding target block of the current layer (enhancement layer) to generate prediction samples (S700). In this case, the encoding apparatus may perform the prediction based on a prediction mode of the encoding target block. For example, when the inter-layer prediction is used for the encoding target block, the inter-layer prediction may be performed based on the inter-layer reference picture derived from the reference picture list as illustrated in FIG. 6.

The encoding apparatus may transform residual samples obtained based on the prediction samples of the encoding target block (S710). As a result of performing the transformation, a 2D array of transformation coefficients for the encoding target block may be generated. The residual samples may be difference values between the prediction samples generated by the prediction and original samples of the encoding target block.

The encoding apparatus scans the 2D array of the transformation coefficients according to the scan order to rearrange the transformation coefficients in a 1D array (S720). In this case, the scan order may be determined based on the prediction mode applied to the encoding target block.

For example, when the prediction mode applied to the encoding target block is the inter-layer prediction, the 2D array of the transformation coefficients is scanned according to the up-right diagonal scan order to rearrange the scanned 2D array as the 1D array. Alternatively, when the prediction mode applied to the encoding target block is the inter-layer prediction, the rearrangement may be performed by specifying the scan order as the vertical scan order or the horizontal scan order.

When the prediction mode applied to the encoding target block is the inter-prediction mode, the 2D array of the transformation coefficients is scanned according to the up-right diagonal scan order to rearrange the scanned 2D array as the 1D array.

When the prediction mode applied to the encoding target block is the intra-prediction mode, the scan order may be determined according to the size of the encoding target block and whether the encoding target block is a block for a luma sample.

That is, when the prediction mode applied to the encoding target block is the intra-prediction mode and the size of the encoding target block is 4 x 4 or when the prediction mode applied to the encoding target block is the intra-prediction mode, the size of the encoding target block is 8 x 8, and the encoding target block is the block for the luma sample, the scan order may be determined according to the an intra-prediction mode value of the encoding target block.

When the intra-prediction mode value of the encoding target block is 6 to 14, the scan order may be determined as the vertical scan order, when the intra-prediction mode value of the encoding target block is 22 to 30, the scan order may be determined as the horizontal scan order, and when the intra-prediction mode value of the encoding target block is 0 to 5, 15 to 21, or 31 to 34, the scan order may be determined as the up-right diagonal scan order.

Further, when the prediction mode applied to the encoding target block is the intra-prediction mode and the size of the encoding target block is larger than 8 x 8, the scan order may be determined as the up-right diagonal scan order.

Since the up-right diagonal scan order, the vertical scan order, and the horizontal scan order haven been described above in detail, a description thereof will be omitted herein.

The encoding apparatus may entropy-encode the 1D array of the transformation coefficients (S730). The encoding apparatus entropy-encodes information required for decoding together with the 1D transformation coefficients to generate a bitstream. The bitstream may be transmitted to the decoding apparatus.

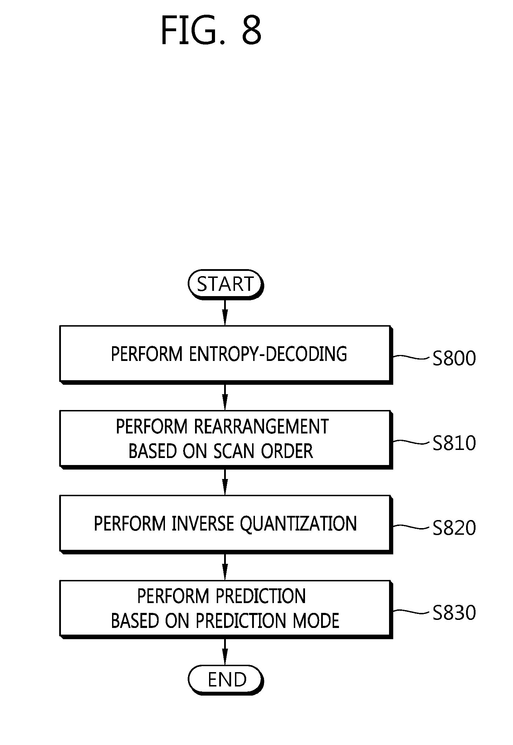

FIG. 8 is a flowchart schematically illustrating an image decoding method supporting a plurality of layers according to the present invention. The method of FIG. 8 may be performed by the decoding apparatus of FIG. 2.

Referring to FIG. 8, the decoding apparatus receives the bitstream to entropy-decode the received bitstream (S800). In this case, the bitstream may include information on a decoding target block of the current layer. The decoding apparatus may obtain a 1D array of transformation coefficients for the decoding target block through the entropy-decoding.

The decoding apparatus scans the 1D array of the transformation coefficients according to the scan order to rearrange the 1D array of the transformation coefficients as a 2D array of the transformation coefficients (S810). In this case, the scan order may be determined based on the prediction mode applied to the decoding target block.

For example, when the prediction mode applied to the decoding target block is the inter-layer prediction, the scan order may be derived as the up-right diagonal scan order. Therefore, the 1D array of the transformation coefficients is scanned according to the up-right diagonal scan order to be rearranged as the 2D array of the transformation coefficients. Alternatively, when the prediction mode applied to the decoding target block is the inter-layer prediction, the scan order may be derived as the vertical scan order or the horizontal scan order.

When the prediction mode applied to the decoding target block is the inter-prediction mode, the scan order may be derived as the up-right diagonal scan order.

When the prediction mode applied to the decoding target block is the intra-prediction mode, the scan order may be derived according to the size of the decoding target block and whether the decoding target block is the block for the luma sample.

That is, when the prediction mode applied to the decoding target block is the intra-prediction mode and the size of the decoding target block is 4 x 4 or when the prediction mode applied to the decoding target block is the intra-prediction mode, the size of the encoding target block is 8 x 8, and the decoding target block is the block for the luma sample, the scan order may be derived according to the intra-prediction mode value of the decoding target block.

When the intra-prediction mode value of the decoding target block is 6 to 14, the scan order may be derived as the vertical scan order, when the intra-prediction mode value of the decoding target block is 22 to 30, the scan order may be determined as the horizontal scan order, and when the intra-prediction mode value of the decoding target block is 0 to 5, 15 to 21, or 31 to 34, the scan order may be determined as the up-right diagonal scan order.

Further, when the prediction mode applied to the decoding target block is the intra-prediction mode and the size of the decoding target block is larger than 8 x 8, the scan order may be derived as the up-right diagonal scan order.

Since the up-right diagonal scan order, the vertical scan order, and the horizontal scan order haven been described above in detail, a description thereof will be omitted herein.

The decoding apparatus may inversely quantize the 2D array of the transformation coefficients (S820). The decoding apparatus may obtain the 2D array of the inversely quantized transformation coefficients for the decoding target block through the inverse quantization.

The decoding apparatus performs the prediction for the decoding target block based on the prediction mode of the decoding target block (S830). The decoding apparatus may generate prediction samples of the decoding target block by the prediction and obtain restoration samples for the decoding target block by using residual samples obtained through transformation of the prediction samples and the inversely quantized transformation coefficients.

In the aforementioned exemplary system, methods have been described based on flowcharts as a series of steps or blocks, but the methods are not limited to the order of the steps of the present invention and any step may occur in a step or an order different from or simultaneously as the aforementioned step or order. The embodiments include examples of various aspects. Accordingly, the present invention will hereinafter include all other replacements, modifications, and changes that belong to the appended claims.

## Claims

1. A method of decoding an image supporting a plurality of layers, the method comprising:
receiving a bitstream including information on a decoding target block of the current layer;
entropy-decoding the bitstream and obtaining a 1D array of transformation coefficients of the decoding target block;
scanning the 1D array of the transformation coefficients according to a scan order and rearranging the 1D array of the transformation coefficients as a 2D array of the transformation coefficients;
inversely quantizing the 2D array of the transformation coefficients and obtaining a 2D array of transformation coefficients inversely quantized for the decoding target block; and
predicting the decoding target block based on a prediction mode for the decoding target block,
wherein in the rearranging of the 1D array as the 2D array of the transformation coefficients, the scan order is derived based on the prediction mode applied to the decoding target block.

2. The method of claim 1, wherein in the rearranging of the 1D array as the 2D array of the transformation coefficients, when the prediction mode applied to the decoding target block is an inter-layer prediction mode, the scan order is set as an up-right diagonal scan order.

3. The method of claim 1, wherein in the rearranging of the 1D array as the 2D array of the transformation coefficients, when the prediction mode applied to the decoding target block is the inter-layer prediction mode, the scan order is set as a vertical scan order.

4. The method of claim 1, wherein in the rearranging of the 1D array as the 2D array of the transformation coefficients, when the prediction mode applied to the decoding target block is the inter-layer prediction mode, the scan order is set as a horizontal scan order.

5. The method of claim 1, wherein in the rearranging of the 1D array as the 2D array of the transformation coefficients, when the prediction mode applied to the decoding target block is an inter-prediction mode, the scan order is set as the up-right diagonal scan order.

6. The method of claim 1, wherein in the rearranging of the 1D array as the 2D array of the transformation coefficients, when the prediction mode applied to the decoding target block is the intra-prediction mode, the scan order is derived according to the size of the decoding target block and whether the decoding target block is a block for a luma sample.

7. The method of claim 6, wherein in the rearranging of the 1D array as the 2D array of the transformation coefficients, when the prediction mode applied to the decoding target block is the intra-prediction mode and the size of the decoding target block is 4 x 4 or when the prediction mode applied to the decoding target block is the intra-prediction mode, the size of the decoding target block is 8 x 8, and the decoding target block is the block for the luma sample, the scan order is derived according to an intra-prediction mode value of the decoding target block.

8. The method of claim 6, wherein in the rearranging of the 1D array as the 2D array of the transformation coefficients, when the prediction mode applied to the decoding target block is the intra-prediction mode and the size of the decoding target block is larger than 8 x 8, the scan order is derived as the up-right diagonal scan order.

9. The method of claim 7, wherein:
in the rearranging of the 1D array as the 2D array of the transformation coefficients,
when the intra-prediction mode value of the decoding target block is 6 to 14, the scan order is derived as the vertical scan order,
when the intra-prediction mode value of the decoding target block is 22 to 30, the scan order is derived as the horizontal scan order, and
when the intra-prediction mode value of the decoding target block is 0 to 5, 15 to 21, or 31 to 34, the scan order is derived as the up-right diagonal scan order.

10. The method of any one of claims 2 to 4, wherein the inter-layer prediction mode is specified from information indicating whether to use the inter-layer prediction while decoding a current picture including the decoding target block.

11. A method of encoding an image supporting a plurality of layers, the method comprising:
performing a prediction based on a prediction mode for an encoding target block of a current layer to obtain a prediction sample;
performing transformation of a residual sample obtained based on the prediction sample to generate a 2D array of transformation coefficients of the encoding target block;
scanning the 2D array of the transformation coefficients according to a scan order and rearranging the 2D array of the transformation coefficients as a 1D array of the transformation coefficients; and
entropy-encoding the 1D array of the transformation coefficients,
wherein in the generating of the 2D array of the transformation coefficients of the encoding target block, the scan order is determined based on the prediction mode applied to the encoding target block.

12. The method of claim 11, wherein in the generating of the 2D array of the transformation coefficients of the encoding target block, when the prediction mode applied to the encoding target block is an inter-layer prediction mode, the scan order is determined as an up-right diagonal scan order.

13. The method of claim 11, wherein in the generating of the 2D array of the transformation coefficients of the encoding target block, when the prediction mode applied to the encoding target block is the inter-layer prediction mode, the scan order is determined as a vertical scan order.

14. The method of claim 11, wherein in the generating of the 2D array of the transformation coefficients of the encoding target block, when the prediction mode applied to the encoding target block is the inter-layer prediction mode, the scan order is determined as a horizontal scan order.

15. The method of claim 11, wherein in the generating of the 2D array of the transformation coefficients of the encoding target block, when the prediction mode applied to the encoding target block is an inter-prediction mode, the scan order is determined as the up-right diagonal scan order.

16. The method of claim 11, wherein in the generating of the 2D array of the transformation coefficients of the encoding target block, when the prediction mode applied to the encoding target block is the intra-prediction mode, the scan order is determined according to the size of the encoding target block and whether the encoding target block is a block for a luma sample.

17. The method of claim 16, wherein in the generating of the 2D array of the transformation coefficients of the encoding target block, when the prediction mode applied to the encoding target block is the intra-prediction mode and the size of the encoding target block is 4 x 4 or when the prediction mode applied to the encoding target block is the intra-prediction mode, the size of the encoding target block is 8 x 8, and the encoding target block is the block for the luma sample, the scan order is determined according to an intra-prediction mode value of the encoding target block.

18. The method of claim 16, wherein in the generating of the 2D array of the transformation coefficients of the encoding target block, when the prediction mode applied to the encoding target block is the intra-prediction mode and the size of the encoding target block is larger than 8 x 8, the scan order is determined as the up-right diagonal scan order.

19. The method of claim 17, wherein:
in the generating of the 2D array of the transformation coefficients of the encoding target block,
when the intra-prediction mode value of the encoding target block is 6 to 14, the scan order is determined as the vertical scan order,
when the intra-prediction mode value of the encoding target block is 22 to 30, the scan order is determined as the vertical scan order, and
when the intra-prediction mode value of the encoding target block is 0 to 5, 15 to 21, or 31 to 34, the scan order is determined as the up-right diagonal scan order.

20. The method of any one of claims 12 to 14, wherein the inter-layer prediction mode is specified by using information indicating whether to use the inter-layer prediction while encoding a current picture including the encoding target block.
